# EUROPÄISCHE PATENTSCHRIFT

(11) **EP 2 222 972 B1**
(45) Veröffentlichungstag und Bekanntmachung des Hinweises auf die Patenterteilung: **13.03.2013**
(21) Anmeldenummer: 08860034.1
(22) Anmeldetag: 02.12.2008
(51) Int. Cl.: F16C 19/38, F16C 19/50, F16C 19/56, B60B 25/00, B64C 25/36

(54) **RADLAGERUNG EINES FLUGZEUGFAHRWERKS**
WHEEL BEARING FOR AN AIRCRAFT ENGINE
LOGEMENT DE ROUE POUR TRAIN D'ATTERRISSAGE D'AVION

(30) Priorität: 11.12.2007 DE 102007059587
(43) Veröffentlichungstag der Anmeldung: 01.09.2010
(73) Patentinhaber: Schaeffler Technologies AG & Co. KG, 91074 Herzogenaurach (DE)
(72) Erfinder: PRÖSCHEL, Christian, 97072 Würzburg (DE); LANG, Robin, 97494 Bundorf (DE); DOTZEL, Thorsten, 97502 Euerbach (DE)
(86) Internationale Anmeldenummer: PCT/DE2008/002006
(87) Internationale Veröffentlichungsnummer: WO 2009/074134

(56) Entgegenhaltungen:
- GB-A- 764 097
- JP-A- 2007 315 526
- US-A- 5 086 821
- US-A- 5 409 048
- "TECHNICAL ADVANCES IN TYRES, WHEELS AND BRAKES" AIRCRAFT ENGINEERING, BUNHILL PUBLICATIONS LTD. LONDON, GB, Bd. 59, Nr. 11, 1. November 1987 (1987-11-01), Seiten 2-05, XP000021436

## Beschreibung

### Gebiet der Erfindung

Die Erfindung liegt auf dem Gebiet der Fahrwerke für Fluggeräte, insbesondere für Fracht- und Verkehrsflugzeuge und betrifft eine Radlagerung eines Flugzeugfahrwerks mit einer Felge, die über eine Lageranordnung um eine Achse drehbar gelagert ist.

Radlagerungen von Flugzeugfahrwerken sind beispielsweise aus der US 5,086,821 A sowie aus der GB 764 097 A bekannt. Diese Radlagerungen weisen zweireihige Wälzlager mit Rollen als Wälzkörpern auf.

Auf diesem Einsatzgebiet sind verschiedene, teilweise gegenläufige Optimierungskriterien zu erfüllen. So sind derartige Fahrwerke und damit Radlagerungen in Relation zur Gesamtbetriebsdauer des Fluggeräts nur kurzzeitig - in diesen Phasen aber äußerst stark - belastet. Dabei müssen die Radlagerungen mit höchster Zuverlässigkeit arbeiten, extreme Kräfte und Momente aufnehmen - beispielsweise beim Bremsvorgang nach der Landung - und sollen dennoch möglichst gewichtsarm und wartungsarm sein.

Hinsichtlich der Wartung, insbesondere zur Lager- und Bremseninspektion ist es wünschenswert, Standardlager verwenden zu können, aber dennoch einen hohen Integrationsgrad zu realisieren und möglichst einfache und kompakte Baugruppen bereitzustellen.

Vor diesem Hintergrund besteht die Aufgabe der vorliegenden Erfindung in der Bereitstellung einer Radlagerung für Flugzeuge, die eine hohe Lebensdauer und Zuverlässigkeit bei einer möglichst geringen Anzahl von Einzelteilen und geringem Eigengewicht aufweist.

Diese Aufgabe wird erfindungsgemäß durch eine Radlagerung mit den Merkmalen des Patentanspruchs 1 gelöst.

Demgemäß umfasst die erfindungsgemäße Radlagerung eine Felge, die über eine Lageranordnung mit zwei Wälzlagern um eine Achse drehbar gelagert ist und ein Lageraußengehäuse, das einteilig ausgebildet ist und das die außenseitigen Laufflächen der Wälzlager beinhaltet, wobei ein integraler Bestandteil des Lageraußengehäuses einen Teil der Felge bildet und wobei das Lageraußengehäuse lösbar mit der übrigen Felge verbunden ist.

Ein erster wesentlicher Aspekt der Erfindung besteht damit darin, dass die Außenringe in ein einziges Bauteil, nämlich das einteilige Lageraußengehäuse, integriert sind. Die Lageranordnung erfährt bereits dadurch eine erhebliche Optimierung ihres Eigengewichts.

Ein weiterer wesentlicher Aspekt der Erfindung besteht darin, dass die Felge teilweise von dem Lageraußengehäuse gebildet ist, so dass sich eine weitere Verminderung der Bauteilanzahl ergibt. Dies wirkt sich nicht nur vorteilhaft auf die Herstellungskosten aus, sondern auch auf die Logistik und die Ersatzteil-Vorratshaltung. Zudem ist durch die reduzierte Bauteilanzahl das Gesamtgewicht der Lageranordnung erheblich optimiert.

Mit der erfindungsgemäßen Ausgestaltung der Radlagerung lässt sich eine gezielte Lagerverspannung realisieren, wobei eine besonders kompakte Anordnung auch mit vergrößertem Lagerteilkreis Platz sparend möglich ist, so dass in unmittelbarer Nähe der Lageranordnung die jeweilige Fahrwerksbremse angeordnet werden kann. Zudem ist die von Felge und Lageraußengehäuse gebildete Einheit als geschlossenes System montierbar bzw. demontierbar und bildet ein nach außen gut abgedichtetes System.

Nach einer vorteilhaften Ausgestaltung der Erfindung ist das Lageraußengehäuse in dem frei um die Achse drehbaren Teil der Lageranordnung angeordnet.

Die Laufflächen der Wälzlager sind integrale Bestandteile des Lageraußengehäuses. Dazu können die Laufflächen bzw. die Lageraußenringe besonders bevorzugt unmittelbar aus dem Material des Lageraußengehäuses bestehen. Dies verringert die Anzahl der zu montierenden Einzelteile und die erforderliche Einzelteil- und Ersatzteillogistik weiter.

Montagetechnisch und für Wartungszwecke ist eine Weiterbildung der Erfindung vorteilhaft, bei der der integrale Bestandteil des Lageraußengehäuses einen seitlich zugänglichen Felgenaußenteil bildet.

Weitere Aspekte und Vorteile der Erfindung gehen auch aus der nachfolgenden Beschreibung der in der Zeichnung dargestellten Ausführungsbeispiele hervor.

Dabei zeigt:

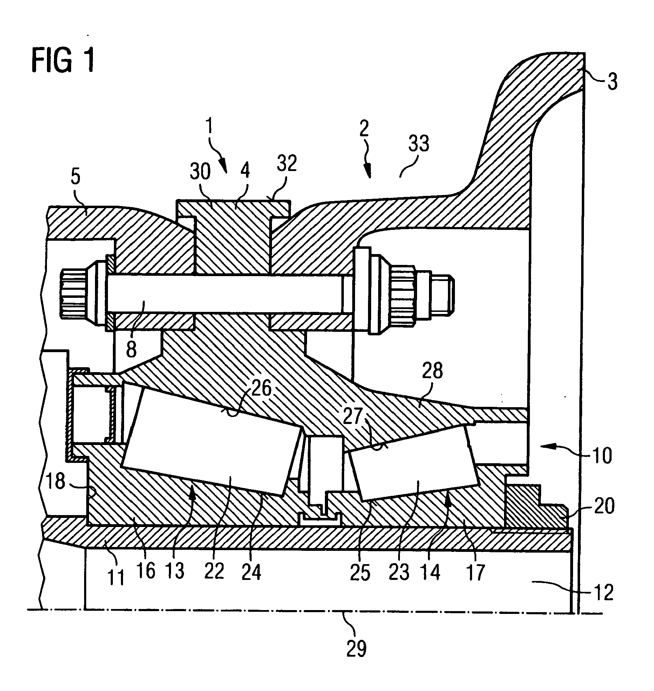

- Figur 1: eine erfindungsgemäße Radlagerung eines Flugzeugfahrwerks.

Figur 1 zeigt im Längsschnitt den oberen Teil einer erfindungsgemäßen Radlagerung 1 eines nicht näher dargestellten Flugzeugfahrwerks. Die Radlagerung umfasst eine Felge 2, die sich aus einem Felgenseitenteil 3, einem Felgenmittelteil 4 und einem sich links anschließenden, nur teilweise dargestellten linken Felgenaußenteil 5 zusammensetzt. Auf die Felge 2 ist an sich bekannter Weise ein nicht dargestellter Reifen montierbar. Die Felgenteile 3, 4 und 5 sind durch mehrere Axialschrauben 8 lösbar miteinander verbunden.

Die Felge 2 ist über eine Lageranordnung 10 drehbar auf einem Achsstummel 11 einer nur andeutungsweise dargestellten Hohlachse 12 gelagert. Die Lageranordnung umfasst zwei Wälzlager 13, 14, die im Ausführungsbeispiel als Kegelrollenlager ausgeführt sind. Die Wälzlager umfassen jeweils einen Innenring 16, 17, der auf dem Achsstummel 11 an einer Schulter 18 anliegt bzw. über eine Achsmutter 20 verspannt ist. Die Kegelrollen 22, 23 rollen innenringseitig auf jeweiligen Laufflächen 24, 25 ab. Die außenseitigen Laufflächen 26, 27 für die Wälzkörper (Kegelrollen) 22, 23 sind im Ausführungsbeispiel nach Figur 1 besonders bevorzugt integral in einem Lageraußengehäuse 28 ausgebildet. Mit anderen Worten sind hier also die Lageraußenringe nicht als separate Teile gestaltet, sondern unmittelbar von dem Material des Lageraußengehäuses 28 gebildet. Das Lageraußengehäuse 28 bildet mit den Lageraußenringen somit den um die Längsachse 29 der Radlagerung frei drehbaren Lagerteil.

Das Lageraußengehäuse 28 weist einen sich radial nach außen erstreckenden Fortsatz 30 auf, der von der Axialschraube 8 durchdrungen ist und mit einer äußeren Mantelfläche 32 im Innenraumbereich 33 des nicht dargestellten Reifens endet. Der integrale Fortsatz 30 bzw. die Mantelfläche 32 bilden damit den Teil der Felge 2, der eingangs bereits als Felgenmittelteil 4 bezeichnet worden ist.

Mit dieser Ausgestaltung wird einerseits dem Lageraußengehäuse 28 eine zusätzliche Teilfunktion - nämlich als Felgenbestandteil - verliehen und andererseits eine besonders hohe Stabilität und symmetrische Belastbarkeit der Lageranordnung realisiert. Durch die kompakte Ausgestaltung kann die Felge zusammen mit dem Lageraußengehäuse so gestaltet sein, dass sie als geschlossene Einheit leicht demontierbar ist. Dies erhöht beispielsweise die Wartungsfreundlichkeit erheblich bei zugleich deutlicher Gewichtsverminderung der gesamten Baueinheit.

### Bezugszeichenliste

- 1, 1-: Radlagerung
- 2, 2': Felge
- 3: Felgenseitenteil
- 3': Felgenaußenteil
- 4: Felgenmittelteil
- 5: Felgenaußenteil
- 8: Axialschrauben
- 10, 10': Lageranordnung
- 11, 11': Achsstummel
- 12: Achse
- 13, 14: Wälzlager
- 13', 14': Wälzlager
- 16, 17: Innenring
- 18: Schulter
- 20: Achsmutter
- 20': Achsmutter
- 22, 23: Kegelrollen
- 24, 25: Laufflächen
- 26, 27: außenseitige Laufflächen
- 28: Lageraußengehäuse
- 29: Längsachse
- 30: Fortsatz
- 32: Mantelfläche
- 33: Innenraumbereich

## Patentansprüche

1. Flugzeugfahrwerk mit einer Radlagerung (1) und mit einer Felge (2), die über eine Lageranordnung (10) mit zwei Wälzlagern (13, 14) um eine Achse (29) drehbar gelagert ist und
mit einem Lageraußengehäuse (28), das einteilig ausgebildet ist und das die außenseitigen Laufflächen (26, 27) der Wälzlager (13, 14) beinhaltet,
wobei ein integraler Bestandteil (30) des Lageraußengehäuses (28) einen Teil (4) der Felge (2) bildet und
wobei das Lageraußengehäuse (28) lösbar mit der übrigen Felge (3, 5) verbunden ist,
**dadurch gekennzeichnet, dass** die Laufflächen (26, 27) der Wälzlager (13, 14) integrale Bestandteile des Lageraußengehäuses (28) sind und dieses einen sich radial nach außen erstreckenden Fortsatz (30) aufweist, der mit einer äußeren Mantelfläche (32) im Innenraumbereich (33) eines auf der Felge (2) montierten Reifens endet, wobei die Wälzlager (13, 14) Kegelrollen als Wälzkörper (22,23) aufweisen, welche jeweils auf einem Innenring (16,17) abrollen, der auf einem Achsstummel (11) an einer Schulter (18) anliegt beziehungsweise über eine Achsmutter (20) verspannt ist.

2. Radlagerung nach Anspruch 1, wobei,
das Lageraußengehäuse (28) in dem frei um die Achse drehbaren Teil (30) der Lageranordnung (10) angeordnet ist.

## Claims

1. Aircraft landing gear having a wheel bearing arrangement (1) and having a wheel rim (2) which is mounted, so as to be rotatable about an axis (29), by means of a bearing assembly (10) with two rolling bearings (13, 14), and
having a bearing outer housing (28) which is formed in one piece and which comprises the outer raceways (26, 27) of the rolling bearings (13, 14),
wherein an integral constituent part (30) of the bearing outer housing (28) forms one part (4) of the wheel rim (2), and
wherein the bearing outer housing (28) is detachably connected to the rest of the wheel rim (3, 5),
**characterized in that** the raceways (26, 27) of the rolling bearings (13, 14) are integral constituent parts of the bearing outer housing (28) and said bearing outer housing has a radially outwardly extending projection (30) which ends with an outer lateral surface (32) in the interior region (33) of a tyre mounted on the wheel rim (2), wherein the rolling bearings (13, 14) have tapered rollers as rolling bodies (22, 23), which tapered rollers roll in each case on an inner ring (16, 17) which, on an axle stub (11), bears against, and/or is clamped by means of an axle nut (20) against, a shoulder (18).

2. Wheel bearing arrangement according to Claim 1, wherein the bearing outer housing (28) is arranged in that part (30) of the bearing assembly (10) which is freely rotatable about the axis.

## Revendications

1. Train d'atterrissage d'avion comprenant un support de palier de roue (1) et une jante (2) qui est supportée de manière rotative autour d'un axe (29) par le biais d'un agencement de palier (10) comprenant deux paliers à roulement (13, 14), et comprenant un boîtier extérieur de palier (28) réalisé d'une seule pièce et contenant les surfaces de roulement extérieures (26, 27) des paliers à roulement (13, 14),
un constituant intégral (30) du boîtier extérieur de palier (28) formant une partie (4) de la jante (2) et
le boîtier extérieur de palier (28) étant connecté de manière détachable au reste de la jante (3, 5), **caractérisé en ce que** les surfaces de roulement (26, 27) des paliers à roulement (13, 14) font partie intégrante du boîtier extérieur de palier (28) et celui-ci présente une avancée (30) s'étendant radialement vers l'extérieur, laquelle se termine par une surface d'enveloppe extérieure (32) dans la région de l'espace interne (33) d'un pneu monté sur la jante (2), les paliers à roulement (13, 14) présentant des rouleaux coniques en tant que corps de roulement (22, 23), qui roulent à chaque fois sur une bague interne (16, 17) qui s'applique sur un tourillon d'essieu (11) contre un épaulement (18) ou qui est précontrainte par le biais d'un écrou d'essieu (20).

2. Support de palier de roue selon la revendication 1, dans lequel le boîtier extérieur de palier (28) est disposé dans la partie (3) de l'agencement de palier (10) tournant librement autour de l'axe.
